# EUROPEAN PATENT APPLICATION

(11) **EP 1 132 791 A2**
(43) Date of publication of application: **12.09.2001**
(21) Application number: 01105694.2
(22) Date of filing: 07.03.2001
(51) Int. Cl.: G05B 19/418

(54) **Processing plant and control systems thereof**

(30) Priority: 11.03.2000 GB 0005820; 10.06.2000 GB 0014112
(71) Applicant: GIRDHAM, PAUL MAXWELL, NOTTINGHAMSHIRE, DN22 8HT. (GB)
(72) Inventor: GIRDHAM, PAUL MAXWELL, NOTTINGHAMSHIRE, DN22 8HT. (GB)
(74) Representative: Lally, William

(57) **Abstract**

A processing plant comprises a control system to control and monitor operation of the machine elements of the plant. The control system comprises a plurality of detecting means each positioned proximate to one of the machine elements of the plant, and which is operative to generate an output signal representative of the condition of operation of the machine element, and to feed such output signal to a central processing unit. In turn, the central processing unit generates an audible output signal which is representative of the sound generated by the machine element during operation thereof, enabling a controller supervising operation of the plant to "hear" the way in which the machine elements are performing.

## Description

This invention is concerned with improvements relating to control systems, particularly of the kind (hereinafter referred to as being of the kind specified) utilised to control a processing plant, including automatic machinery operating in a factory or the like, hereinafter generically included in the phrase "processing plant" for convenience.

Historically the operation of a processing plant comprising a number of machines, particularly automatically or semi-automatically operating machines, would be controlled by a supervisor who would perhaps walk around the processing plant, inspecting the various machines and listening to them in operation, to take remedial action in the event of a fault. The aural aspect was of importance, and an experienced supervisor would often be able to detect, by hearing alone, that there was a fault in one particular machine, or that the processing operation may not be running as smoothly as possible.

With the advent of computers, greater reliance was placed on computer control, and as process and machinery operations became more and more automated, control over and supervision of the plant would to an increasing extent take place in a control room, to which output signals from the various machines, and/or detectors in relation to certain stages in a processing operation, would be supplied.

Supervision of the plant or equipment became increasingly physically isolated from the plant and equipment itself, and increasing reliance came to be placed on outputs from the controlling computers.

Whilst it became conventional for the controlling computer to provide aural output signals, such as alarms or buzzers, these were in general activated only when an actual fault occurred, and consequently were capable of responding only to a predictable fault. Further, for a computer to be operative to indicate the condition of the machinery or plant over a complete range of operating parameters, would be expensive to set up, and would result in the utilisation of a computer controlled panel having a very large number of visual output signals.

Thus, a supervisor controlling operation or the plant or machinery will sit in a control room and face screens, dials and meters giving him readouts from a variety of machines or stages in the processing operation. Frequently the supervisor will be required, in addition to supervising operations of the plant, to do other work, the control function being limited to taking an occasional glance at the control panel.

Whilst the supervisor will be alerted to the occasion of a major fault, it is not practical to provide within conventional systems a means by which the supervisor may respond other than to those output parameters which are input into the computer. Thus, the supervisor inevitably acts only retroactively, and cannot act proactively.

According to this invention there is provided a control system for a processing plant which operates to control operation of the plant in response to output signals representing the state of various elements of the processing plant, wherein the control system comprises means which is operative to generate sound output signals analogous to sound produced by the plant during operation thereof.

The sound output signals may be closely analogous to the produced sound, and may for example be provided by microphones provided in the vicinity of some at least of the elements of the plant, a computer being operative to regenerate the sounds at speakers of the control system.

Thus, a supervisor overseeing the control system may be placed in the same condition as the control room in which the system is located being audibly proximate to the processing plant, enabling the controller to be aware of the overall condition of the plant by listening to the sound produced.

Preferably in such circumstances the sound output signals are connected to provide a modified sound output selected to provide a bias towards the sounds generated by elements of the plant which are most significant to the smooth running thereof.

Alternatively however the sound output signals are electronically generated so as to be representative only of the sound generated by the plant, but preferably sufficiently representative as to be recognisable by a supervisor.

For example, in the case of a fan, the sound output signal may be in the form of a continuous high frequency pitch, albeit preferably at a lower power, and in the event that the fan ceases to operate, the frequency may reduce over a relatively long period of time (typically 10 seconds) as is the case of the noise actually generated by a fan going off-line.

Alternatively in the case of cutting machinery, the sound produced by the sound output system may vary continuously independent upon the speed of operation of the machine motor, ie. to commence at a higher frequency as the cutting tool approaches a workpiece, reducing in frequency as the cutting tool commences a cut, and increases again on completion of the cut.

If desired the sound output signals produced for some machinery may be continuous, but if desired the sound output signals may be selective, eg. produced only when an unexpected event occurs.

Thus whilst it might be desirable for a controller to be aware of the way in which cutting machinery is operating on a continuous basis, it may be desirable for him to be made aware of the way in which a fan, for example, is operating only when the fan ceases to operate.

Thus, the sound signal for the fan may be produced only when the fan ceases to operate, as may be signalled to the control system by a drop in current drawn by the fan, and such sound indication may be in the form of a reducing pitch, which would be recognised audibly by the supervisor as a fan going off-line.

As another example, the operation of relays may be audibly signalled by the control system as "clicks". Thus if the supervisor is accustomed to hearing "clicks" in a specific sequence or at specific time intervals, he will become conscious that a problem may exist, or that a potential problem may be developing, if these clicks are heard at different time intervals.

In particular, it is envisaged by the use of the invention, that a supervisor may be provided with an "ambience" analogous to the ongoing operation of the plant, either overall in general terms, or concentrating primarily on specific elements of the plant, eg. those over which greatest supervision needs to be exercised. Thus, a supervisor may be carrying out other functions, but be aware at a lower level of consciousness of the ongoing processing operation, and will be alerted to the occurrence of a problem, or possibly even the development of a problem, by the change of that ambience.

Whilst the invention may be put into practice by producing sound signals analogous to the state of the machinery under supervision, in the event that the plant or machinery elements thereof reduce in operational efficiency relatively slowly, the supervisor may not initially appreciate this, even where a sound output signal analogous to the state of the machinery is being produced by the control system. For example, should a machine such as a conveyor slowly reduce in speed, the supervisor may note the reducing frequency (eg) of the output signal which is produced to represent the speed of the conveyor.

Thus if desired in order to enable the supervisor more readily to supervise operation of the plant, the control system may comprise additional means to generate an additional output signal which is representative of a desired state of operation of the plant, or elements thereof.

Preferably such additional sound output signal is recognisable in relation to the function which it is intended to represent, and may differ from the sound output signal which is produced to provide the supervisor with an indication as to the performance of the plant, so as to provide the supervisor with a base line or datum by which he may carry out a comparison.

For example, the control system may produce a sound output signal at a datum frequency, representing the normal operational speed of a machine, in addition to a sound output signal representing the actual speed of operation of the machine.

According to this invention there is also provided, for use with a control system for a processing plant which operates to control operation of the plant in response to output signals representing the state of the various elements of the processing plant,
a supplementary input system operative to generate sound output signals analogous to the sounds produced by the plant during operation thereof.

According to this invention there is also provided a method of controlling a processing plant of the kind utilising a computer to which input signals, representing the state of various machines of the plant and/or representing various stages in a processing operation, are supplied, and from which the computer produces output signals in the form of one or more visual displays and one or more aural displays representing the condition of the plant,
characterised in that the output signals produced by the computer include one or more audible signals analogous to the sound produced by elements of the plant during their operation.

According to this invention there is also provided a processing plant comprising:
a) a plurality of machine elements;
b) a plurality of detecting means each located proximate to one of the machine elements and which is responsive to the condition of operation of the machine element to produce an output signal which is functional of the operating condition of the machine element;
c) a central processing unit to which the output signals from the detecting means are applied; and
d) a plurality of sound generation means each operative under the control of the central processing unit and in response to an input to the central processing unit from the detecting means to generate an audible output signal representative of the operating condition of the machine element to which it is proximate.

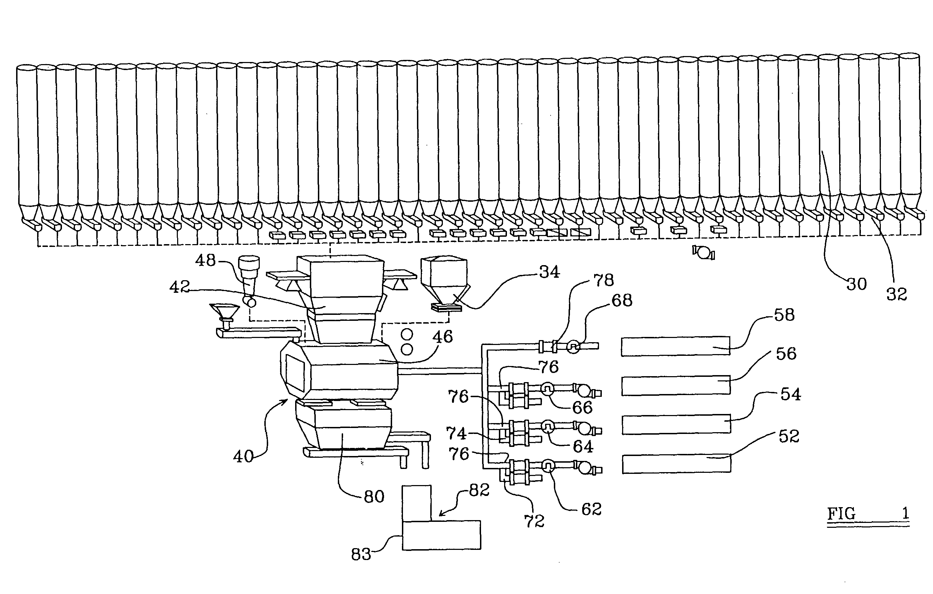

A number of examples will now be given, to illustrate the invention by way of example, Example 1 being read with reference to the accompanying drawing which is a schematic representation of a processing plant of the kind to which the present invention is related.

### Example 1:

The accompanying drawing shows the processing plant which is the preferred embodiment of this invention, comprising a plurality of bins 30 containing various materials, each comprising a discharge outlet 32. Mounted for movement longitudinally of the array of bins is a collector 34, said collector being moveable to a position beneath each outlet 32 to collect material discharged therefrom, and incorporating a weighing mechanism to provide an output signal when a desired quantity of material has been received.

The collector 34 is moveable and is so moved by the control system when the output signal from the weighing mechanism has been generated, to a position above a processing machine 40, and may be operated to tip its contents into a hopper 42 of that machine, the hopper 42 also including a weighing mechanism. When the hopper 42 has been loaded with a desired quantity of materials from the bins 30, the hopper 42 may be operated to discharge its contents to a mixing chamber 46, into which air may be blown from a blower 48.

Additional materials may be fed into the mixing chamber 46 from dispensers 52, 54, 56, 58, utilising air blowers 62, 64, 66, 68, and control valves 72, 74, 76, 78.

On completion of mixing in the chamber 46, the mixed material may be fed into a discharge hopper 80 and conveyed to further processing machinery by a conveyor 82.

The processing plant shown in the drawing is controlled by a computer, to which various input signals representing the state of various control valves; the position of the collector 34; the weight of material in the collector 34 and in the hopper 42; the condition of the dispensers 52, 54, 56, 58 and of their fan units 62, 64, 66, 68; the condition of the control valves 72, 74, 76, 78; and the speed of operation of a motor 83 of the conveyor 82 are fed, appearing on a control panel of the computer either graphically or representationally.

However, additionally the control system is operative to generate audible sound outputs representative of the condition of some at least of the elements of the plant. For example, operation of the valves controlling the discharge outlets 32 may be signified by an audible "click", and when the collector 34 reaches a required weight, a "ting" may be heard. An audible rumble may be produced on discharge of the collector 34 into the hopper 42, and again, a "ting" at perhaps a different frequency may be produced when the hopper 42 reaches its desired weight.

Another sound, recognisable by the supervisor, will be generated when the hopper 42 discharges into the mixing chamber 46, and a different sound may be generated as the elements of the mixing chamber operate to mix the material delivered thereto.

An output signal representing the speed of operation of the motor 83 may be in the form of a continuous or intermittent tone at a frequency dependant upon the speed of operation of the motor, enabling the supervisor to be alerted for example when there is any sudden reduction in the speed of the motor, by a falling off in the pitch of the output signal.

Thus a supervisor, in addition to being capable of determining the state of the processing plant by reference to various readouts of the controlling computer, or a graphic display of the various integers of the system, will be able to "hear" the ongoing operation of the plant, enabling him to continue to carry out a supervisory function whilst doing another job. If something unexpected occurs, then the supervisor may be alerted by the changed sound pattern to inspect the control panel to determine precisely what may have occurred, alerting him to the fact that interventionary action may be required.

Additionally however, the supervisor certainly with experience will be able to recognise subtle changes in the timing or sequencing or pitch of the various analogous sounds produced by the control system, to recognise for example when the processing plant is not operating at peak efficiency, or when possibly a machinery element is underperforming.

### Example 2:

A processing plant comprises a plurality of integrated conveyors, each requiring to be brought online in sequence to avoid a power overload, since the start up power is higher than the running power. Thus where the operation of the relays delivering current to the conveyors are simulated by the control system as audible "clicks", the supervisor will expect to hear a series of clicks separated by approximately specific time intervals - "click ... click ... click ... click".

If unusually the supervisor hears a longer time interval between one click and the next, this may indicate that one conveyor is reaching its running speed more slowly, which might indicate that the motor is performing at impaired efficiency, suggesting that remedial action might be required in the near future.

Conversely, it will be appreciated that to incorporate such capability purely by conventional sensing systems, would result in a very complicated control system having a control panel which would require constant visual monitoring and/or be difficult to interpret by the supervisor.

### Example 3:

A batch delivery system comprises a hopper to feed material onto a weighing plate. When a desired weight is achieved, feed of raw material is ceased by a cut-off valve, and the weighing plate is moved to dispense the batch.

On return of the plate to its operative position, the weight is read: if the weight is not zero, this could indicate the adherence of some material to the plate, and to accommodate for this, a further "clearing" step is carried out, in which the weighing plate is again moved to its dispense position, possibly with some vibration of the plate.

Thus, the supervisor may hear a "click" for operation of the cut-off valve, a "hiss" for feed of material onto the weighing plate, and a "clink" for a dispensing movement of the weighing plate.

The controller will normally hear the sequence "click, hiss, clink, click...", with an occasional "double-clink".

If the weight of the weighing plate does not return to zero after a further "clearing" movement of the weighing plate, an alarm may be activated, which in conventional manner will alert the controller to the problem of material remaining adherent to the weighing plate.

However if a small quantity of adherent material remains, the weight of the plate might be indicated as zero within the normal tolerances, allowing a further dispensing operation to take place. However after that dispensing operation the weight does not return to zero, requiring a further clearing operation, which will not be indicated by the conventional control system as constituting a fault.

However, when the audible system generates a double-clink more frequently than would normally be expected, the supervisor, even though not necessarily paying a great deal of attention, will be alerted by a change in the ambience to the fact that the dispensing machinery is not operating as efficiently as conventional, and may take investigatory action.

### Example 4:

Whilst in Example 1 a sound output signal is produced which is representative of the speed of operation of the conveyor motor 83, enabling an operator to determine whether or not the motor is running at an optimum speed, if desired a second output signal is produced at a tone which, were motor running optimally, would be heard as being the same as the first sound output signal. Thus, in the event that the motor is running more slowly, the second sound output signal will be heard by the supervisor as being at a higher frequency. In this way, the supervisor may be alerted to the fact that the motor is running slightly slower than optimum, or in the event that the speed of the motor reduces slowly over a period of time.

The second output signal may be produced periodically, or only when a disparity occurs between the actual running conditions and the optimum running conditions.

### Example 5:

Where a machine operates periodically to carry out an operation, such as delivering an article through an output slot, in accordance with Example 1 the machine may generate a tone when this happens, to alert the supervisor to that fact, so that he is made aware of the rate at which articles are produced. Where the sound output signal is a tone, conveniently a second sound output signal is produced immediately following the first sound output signal, which may be at a higher frequency to indicate that the machine is running at less than optimum conditions. Again, the second sound output signal may be produced only when the machine is detected as running below optimum, but may be produced in all circumstances, conveniently immediately following the first sound output signals.

Thus, where the first sound output signal is in the form of a tone representing the frequency of an operation, the second sound output signal may be produced at such a time as to "blend" with the first sound output signal, but which will be heard at a raised tone if the machine is operating below optimum.

In the text hereinbefore appearing, by the term "analogous" in the context of the sound output signals, we mean representatively similar to the sound produced by the plant, including elements of the plant, during operation thereof. Thus whilst the sound output signals may be audibly similar to the sound actually produced by the plant (or the elements thereof), and may be recognisable, particularly to the skilled man familiar with the plant, the sound output signals may be similar only in a general sense, such as type of sound, level of sound, frequency of sound, which would enable the skilled man to associate the sound output signals produced in accordance with this invention with the elements of the plant associated therewith.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A control system for a processing plant which operates to control the operation of the plant in response to output signals representing the state of various elements of the processing plant
wherein the control system comprises means which is operative to generate sound output signals representative of the condition of the machine elements of the plant during operation thereof.

2. A control system according to claim 1 comprising:
a) a plurality of detecting means positioned in use proximate to machine elements of the processing plant; and
b) a processing unit to which output signals from the detecting means are applied;
the sound generation means being operative under the control of the processing unit to generate a sound output signal in relation to each of the detecting means.

3. A control system according to claim 2 wherein the detection means are operative to produce output signals functional of the sound produced by the machine elements to which they are proximate.

4. A control system according to claim 3 wherein the processing unit is operative in response to signals received from the detecting means to generate sound output signals analogous to the sound produced by the machine elements of the plant.

5. A control system according to claim 1 wherein the processing unit is operative also to produce sound output signals representative of a desired state of operation of machine elements of the plant.

6. A control system according to claim 2 wherein the detecting means are operative to produce output signals in response to the sound produced by the machine elements to which they are proximate.

7. A control system according to claim 2 where the detecting means is operative to produce output signals in response to an operating parameter of the machine elements to which they are proximate.

8. A control system according to claim 2 wherein some of the detecting means are operative to produce output signals in response to sound produced by the process elements, and some of the detecting means are operative to produce output signals in response to an output parameter of the process elements to which they are proximate.

9. For use with a control system for a processing plant which operates to control operation of the plant in response to output signals representing the state of the various elements of the processing plant,
a supplementary input system operative to generate sound output signals analogous to the sounds produced by the plant during operation thereof.

10. A method of controlling a processing plant of the kind utilising a computer to which input signals, representing the state of various machines of the plant and/or representing various stages in a processing operation, are supplied, and from which the computer produces output signals in the form of one or more visual displays and one or more aural displays representing the condition of the plant,
**characterised in that** the output signals produced by the computer include one or more audible signals analogous to the sound produced by elements of the plant during their operation.

11. A processing plant comprising:
a) a plurality of machine elements;
b) a plurality of detecting means each located proximate to one of the machine elements and which is responsive to the condition of operation of the machine element to produce an output signal which is functional of the operating condition of the machine element;
c) a central processing unit to which the output signals from the detecting means are applied; and
d) a plurality of sound generation means each operative under the control of the central processing unit and in response to an input to the central processing unit from the detecting means to generate an audible output signal representative of the operating condition of the machine element to which it is proximate.
